# EUROPÄISCHE PATENTSCHRIFT

(11) **EP 1 486 404 B1**
(45) Veröffentlichungstag und Bekanntmachung des Hinweises auf die Patenterteilung: **26.05.2010**
(21) Anmeldenummer: 03405410.6
(22) Anmeldetag: 08.06.2003
(51) Int. Cl.: B62D 51/06

(54) **Selbstfahrende, einachsige Arbeitsmaschine für das Betreiben und stossweise oder gezogene Fortbewegen anbaubarer Arbeitsgeräte**
Single axle self-propelled working machine for driving pushed or pulled working implements
Machine de travail automotrice à essieu unique pour l'entraînement d'outils de travail et leur déplacement en poussée ou en traction

(43) Veröffentlichungstag der Anmeldung: 15.12.2004
(73) Patentinhaber: Rapid Technic AG, 8953 Dietikon (CH)
(72) Erfinder: Maucher, Stefan, 8953 Dietikon (CH)
(74) Vertreter: Fenner, Werner

(56) Entgegenhaltungen:
- AT-B- 388 638
- GB-A- 625 247
- GB-A- 699 754
- GB-A- 2 209 719
- US-A- 5 137 100

## Beschreibung

Die Erfindung betrifft eine selbstfahrende, einachsige Arbeitsmaschine für das Betreiben und stossweise oder gezogene Fortbewegen unterschiedlicher Anbaugeräte, welche Arbeitsmaschine von vorwärts- resp. rückwärts in eine entgegengesetzte Fahrtrichtung umschaltbar ist und an um eine etwa senkrechte Achse jeweils in einem Halbkreis schwenkbaren Führungsholmen zur Aenderung der Fortbewegungsrichtung angeordnete Betätigungsorgane einer Lenkvorrichtung aufweist, bestehend aus einem Antriebsmotor für die Anbaugeräte, die einenends der Arbeitsmaschine mit einer Antriebswelle eines Getriebes verbunden sind, und einer mit Rädern einer quer zur Fortbewegungsrichtung angeordneten Fahrachse steuerbar verbundenen mechanischen oder hydraulischen Antriebsvorrichtung, wobei für einen Wechsel zur stossweisen oder gezogenen Fortbewegung eines Anbaugerätes mit sinngemäss unveränderten Bedienungsfunktionen der an den Führungsholmen zur Lenkung angeordneten Betätigungsorgane ein an einem Gestell der Maschine befestigte Schaltvorrichtung vorgesehen ist.

Arbeitsmaschinen der eingangs erwähnten Art werden u.a. zur Futterbergung oder Bodenbearbeitung in der Landwirtschaft, zur Pflege der Landschaft und von Parkanlagen, Gärten sowie zur Schneeräumung eingesetzt.

Hierzu steht ein auf einer Fahrachse befestigter, als Antriebsmotor benutzter Verbrennungsmotor zur Verfügung, der einerseits über ein Getriebe eine Abtriebsresp. Zapfwelle für die antreibbaren Anbaugeräte, wie Mähwerke, Bodenbearbeitungsgeräte, beispielsweise Fräsen oder Schneefräsen antreibt, und andererseits zur Fortbewegung der Arbeitsmaschine mittels einer von Hand betätigbaren mechanischen Lenkbremsanordnung oder eines hydraulischen Fahrantriebes zum Antrieb einer Hydraulikpumpe mit nachgeschalteten Hydraulikmotoren benutzt wird, wozu eine reversierbare Hydraulikpumpe vorgesehen ist. Ueblicherweise ist die Arbeitsmaschine mit einer mechanischen Feststellbremse ausgerüstet.

Zur Inbetriebnahme der Arbeitsmaschine ist der Antrieb der Zapfwelle für die Anbaugeräte ausgeschaltet und die Hydraulikpumpe befindet sich in einer sog. Nullstellung. Ist letzteres übrigens nicht der Fall, liegt beispielsweise ein kontaktloser Zustand am Zündungskreis vor, der ein Anlassen des Antriebsmotors verhindert. Mittel eines von Hand betätigbaren Gashebels kann nun die Drehzahl des Antriebsmotors aus dem Leerlauf erhöht werden.
Ein separater Betätigungshebel dient der Inbetriebsetzung der Hydraulikpumpe, die in eine Fortbewegungsrichtung der Arbeitsmaschine versetzbar schaltbar und danach zur Aenderung der Fahrgeschwindigkeit regulierbar ist. In der Nullstellung der Hydraulikpumpe ist der Fahrantrieb blockiert.

Bei gewählter Fahrtrichtung an der Hydraulikpumpe bewegt sich die Arbeitsmaschine auf einem geraden Weg vorwärts resp. rückwärts. Zur Aenderung der Fortbewegungsrichtung ist an jedem Führungsholm ein betätigbarer Lenkhebel vorgesehen, der beim Ziehen eine gewünschte Fahrtrichtungsänderung der Arbeitsmaschine bewirkt. D.h., zieht der Bedienende an dem in Fahrtrichtung am rechten Führungsholm befestigten Lenkhebel, dreht die Arbeitsmaschine solange nach rechts, bis der Lenkhebel freigegeben wird, so dass er sich in die Ruhelage zurückbewegt. Der gleiche Vorgang findet mit der Betätigung des linken Lenkhebels statt, mit dem Unterschied, dass die Arbeitsmaschine nach links verfährt, wobei die Stärke des Lenkungseinschlages jeweils proportional zur Auslenkung des Lenkhebels erfolgt.

Damit die Arbeitsmaschine universell einsetzbar ist, d.h., dass sowohl stossweise fortbewegte Anbaugeräte wie auch alternativ nachziehbare Anbaugeräte verwendbar sind, wurde die Arbeitsmaschine mit jeweils einer Antriebswelle an der Vorderseite und an der Rückseite ausgebildet. Dafür sind ein erheblicher Aufwand und Kosten erforderlich.

Alternativ bestünde die Möglichkeit, die mit einer einzigen Abtriebswelle ausgebildete Arbeitsmaschine mit um 180° versetzbaren Führungsholmen bei gleichzeitigem Umbau der Mittel zur Lenkbetätigung auszuführen. Eine solche Ausführung beeinträchtigt jedoch den Bedienungs- und Betriebskomfort erheblich und erhöht das Betriebs- und Unfallrisiko aufgrund der geänderten Lenkfunktionen für den Bedienenden.

Die vorveröffentlichte GB 2 209 719 A offenbart eine gattungsähnliche Arbeitsmaschine mit einem Lenkkupplungsumschaltmechanismus, bei der die Lenkholmen um 180° schwenkbar sind, sodass die Arbeitsmaschine auch in einer zur Fortbewegungsrichtung entgegengesetzten Richtung verwendbar ist.

Es ist Aufgabe der Erfindung, eine Arbeitsmaschine der eingangs genannten Art zu schaffen, bei der ein Wechsel von stossweise fortbewegten zu gezogenen Anbaugeräten die sinngemässen Bedienungsfunktionen für das Lenken der Arbeitsmaschine nicht ändern.

Erfindungsgemäss wird die Aufgabe dadurch gelöst, dass die Schaltvorrichtung ein Schwenklager aufweist, das durch einen gestellseitig befestigten Support und ein an diesem gelagertes Schwenkorgan ausgebildet ist, an dem die mit den Betätigungsorganen versehenen Führungsholme der Lenkvorrichtung befestigt sind.
Es lassen sich durch diese Lösung stossweise resp. gestossene wie auch gezogen fortbewegte Anbaugeräte mit ein und derselben Abtriebswelle eines Getriebes koppeln und an der gleichen Anbauvorrichtung montieren resp. ein mühsames Umrüsten der Betätigungsorgane wie bisher kann vermieden werden.

Dadurch kann das Unfallrisiko im Umgang mit einer Arbeitsmaschine erheblich eingeschränkt werden und die Bedienbarkeit erweist sich als einfach.

Bei einer Arbeitsmaschine mit einer auf eine Antriebsvorrichtung der Räder einer Fahrachse einwirkenden mechanischen Lenkanordnung, die jeweils eine einem Rad zugeordnete, manuell über Lenkhebel betätigbare Bremsvorrichtung aufweist, vorzugsweise eine Reibungsbremse, wie beispielsweise in der CH 657815 A5 beschrieben, ist es vorteilhaft, wenn die an den Führungsholmen in Griffnähe befestigten Betätigungsorgane mit der Schaltvorrichtung verbunden sind.

Ist die Arbeitsmaschine jedoch mit einer hydraulischen Antriebsvorrichtung ausgestattet, bei der eine Hydraulikpumpe über ein betätigbares (verstellbares) Steuerventil jeweils zur Aenderung der Drehzahl eines Rades mit einem Hydraulikmotor leitungsverbunden ist, sind die resp. das Steuerventil vorzugsweise mit der Schaltvorrichtung verbunden.

Vorteilhaft ist die Schaltvorrichtung durch ein an einem Gestell der Maschine um eine etwa senkrechte Achse angeordnetes Schwenklager ausgebildet, das einen gestellseitig befestigten Support und ein an diesem gelagertes Schwenkorgan aufweist, wodurch ein Wechsel der Anbaugeräte gegenüber dem bisherigen Umrüsten erheblich vereinfacht werden kann.

Vorzugsweise sind die Führungsholme und Betätigungsorgane an dem Lenkorgan der Schaltvorrichtung befestigt, wodurch umständliche bauliche Massnahmen vermieden werden können.

Die an dem Schwenkorgan des Schwenklagers angeordneten resp. angeordneten Betätigungsorgane der Lenkvorrichtung können jeweils direkt oder durch ein den Betätigungsorganen zugeordnetes Uebertragungselement mit einem der Hydraulikpumpe nachgeschalteten Steuerventil eines Hydraulikmotors antriebsverbunden sein, sodass eine direkte Schaltverbindung mit konstruktiv einfachen Mitteln entsteht.

Als einfache weiterausgestaltete Ausführungsform der Maschine erweist es sich auch, wenn die an dem Maschinengestell resp. dem Support angeordneten Betätigungsorgane der Lenkvorrichtung jeweils eine mit einem als Stössel ausgebildeten Ventilbetätigungselement antriebsverbundenen Schaltelement, beispielsweise eine Betätigungsklappe oder ein in einer Kulisse senkrecht geführter Kulissenstein oder dgl. aufweisen. Die Schaltelemente könnten jeweils auch in einer Führung angetrieben werden.

Eine einfache Ausführung der Schaltvorrichtung mit Betätigungsklappen sieht vor, dass letztere jeweils um eine gemeinsame Schwenkachse an dem Support gelagert sind.

Zweckmässig sind die Schaltelemente resp. Betätigungsklappen in einer Ausnehmung des Supports angeordnet, sodass sie wenig Platz beanspruchen.

Wenn die Ausnehmung konzentrisch zur Schwenkachse des Schwenklagers angeordnet ist, ist sie auf einfache Weise herstellbar.

Alternativ kann das Uebertragungselement als Kipphebel, Stössel oder mit einem Schaltelement formschlüssig verbunden ausgebildet sein, die jeweils einen auf ein Schaltelement oder eine Betätigungsklappe einwirkenden Stossfinger aufweisen.

Als zuverlässige Betätigungmittel erweisen sich bei einer mechanischen wie auch einer hydraulischen Antriebsvorrichtung mit dem Schwenkorgan verbundene Betätigungsorgane der Lenkvorrichtung, die jeweils einen an einem Bedienungsgriff eines Führungsholms befestigten Lenkhebel aufweisen, der durch einen Bowdenzug mit dem Kipphebel verbunden ist.

Als bewährtes Mittel gelten Betätigungsorgane, die gegen eine Rückstellkraft beaufschlagbar sind.

Zur Schwenkarretierung der Schaltvorrichtung resp. des Schwenkorgans in einer Betriebsstellung der Arbeitsmaschine ist zweckmässig ein an dem Schwenkorgan befestigter, parallel zur Achse jeweils in eine Bohrung des Supports einrastbarer und entnehmbarer Arretierdorn vorgesehen.

Um die Arbeitsmaschine entlang von ortsfesten Objeten einsetzen zu können, sind die an dem Schwenkorgan befestigten Führungsholme in eine zur Fortbewegungsrichtung verschwenkte Lage versetzbar.

Anschliessend wird die Erfindung unter Bezugnahme auf die Zeichnung, auf die bezüglich aller in der Beschreibung nicht näher erwähnten Einzelheiten verwiesen wird, anhand eines Ausführungsbeispiels einer hydraulisch betriebenen Maschine erläutert. In der Zeichnung zeigen:
- Fig. 1: eine Seitenansicht einer selbstfahrenden, einachsigen Arbeitsmaschine,
- Fig. 2: eine auszugsweise Draufsicht auf die Arbeitsmaschine gemäss Fig. 1,
- Fig. 3: eine räumliche Darstellung der Arbeitsmaschine gemäss Fig. 2,
- Fig. 4: einen auszugsweisen Längsschnitt in der Längsmittelachse der Arbeitsmaschine,
- Fig. 5: einen Schnitt nach der Linie V - V in Fig. 4 und
- Fig. 6: eine auszugsweise Ansicht gemäss Pfeil VI in Fig. 4.

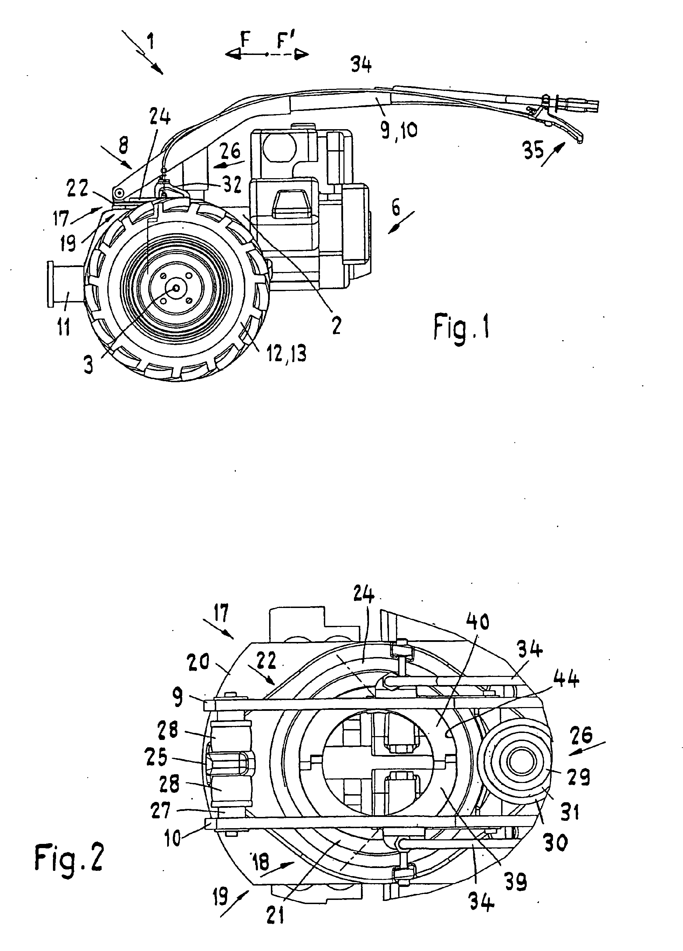

Fig. 1 vermittelt eine selbstfahrende, einachsige Arbeitsmaschine 1 für das Betreiben und stossweise oder gezogene Fortbewegen unterschiedlicher Arbeits- resp. Anbaugeräte (nicht dargestellt). Als Anbaugeräte sind u.a. Balkenmähwerke mit wenigstens einem quer zur Fortbewegungsrichtung oszillierend angetriebenen Mähorgan oder mit rotierenden Mähorganen wie auch Schneeräumgeräte bekannt, die in Fortbewegungsrichtung an der Arbeitsmaschine 1 frontseitig angebaut sind, also stossweise fortbewegt werden. Als gezogene Anbaugeräte werden u.a. Bodenbearbeitungsgeräte, wie beispielsweise Bodenfräsen verwendet, die in fortbewegungsrichtung betrachtet an der Rückseite der Arbeitsmaschine 1 befestigt sind.

Die Arbeitsmaschine 1 ist mit einem reversierbaren Antrieb ausgerüstet, der eine zur Fortbewegungsrichtung F entgegengesetzte Fortbewegungsrichtung F' erlaubt und zur Aenderung der Fortbewegungsrichtung jeweils entsprechend umschaltbar ist.

Die Arbeitsmaschine 1 besitzt ein Gestell 2, mit dem eine Fahrachse 3 mit von Hydraulikmotoren 4 angetriebenen Rädern 12, 13 verbunden ist. Das Gestell 2 ist als Tragorgan eines Antriebsmotors 6, vorzugsweise eines Verbrennungsmotors, eines Getriebes 7, mit Betätigungsorganen und Führungsholmen 9, 10 ausgebildet. Für das Betreiben der Anbaugeräte ist eine Abtriebswelle resp. Zapfwelle an dem Getriebe 7 vorgesehen, von der in Fig. 1 ein Zapfwellengehäuse 11 erkennbar ist. Für den hydraulischen Fahrantrieb der Räder 12, 13 ist eine Hydraulikpumpe 14 jeweils über ein Steuerventil 15, 16 mit einem Hydraulikmotor 4, 5 leitungsverbunden. Die Räder 12, 13 sind an einer quer zur Fortbewegungsrichtung ausgerichteten, horizontalen Fahrachse 3 angeordnet.

Für einen Wechsel von einer stossweisen auf eine gezogene -oder umgekehrt-Fortbewegung eines an der Arbeitsmaschine 1 befestigten Anbaugerätes mit sinngemäss unveränderter Bedienungsfunktion von an den Führungsholmen 9, 10 zur Lenkung der Arbeitsmaschine 1 angeordneten Betätigungs- bzw. Bedienungsorgane, sind die Führungsholme 9, 10 um eine etwa senkrechte Achse jeweils in einem Halbkreis resp. um 180° schwenkbar mit einer die Steuerventile 15, 16 betätigenden Schaltvorrichtung 17 verbunden. Der der rechten Hand zugeordnete, in Fortbewegungsrichtung an dem rechten Führungsholm befestigten Lenkhebel ist üblicherweise für ein Lenken der Maschine 1 nach rechts vorgesehen; der Lenkhebel an dem linken Führungsholm für eine Lenkbewegung nach links. Selbstverständlich könnte der Lenksinn auch sinngemäss so ausgelegt werden, dass die Betätigungsorgane am rechten Führungsholm für eine Lenkbewegung nach links vorgesehen sind und dass die für den linken Führungsholm vorgesehenen Betätigungsorgane zur Lenkung der Arbeitsmaschine nach rechts bestimmt sind.

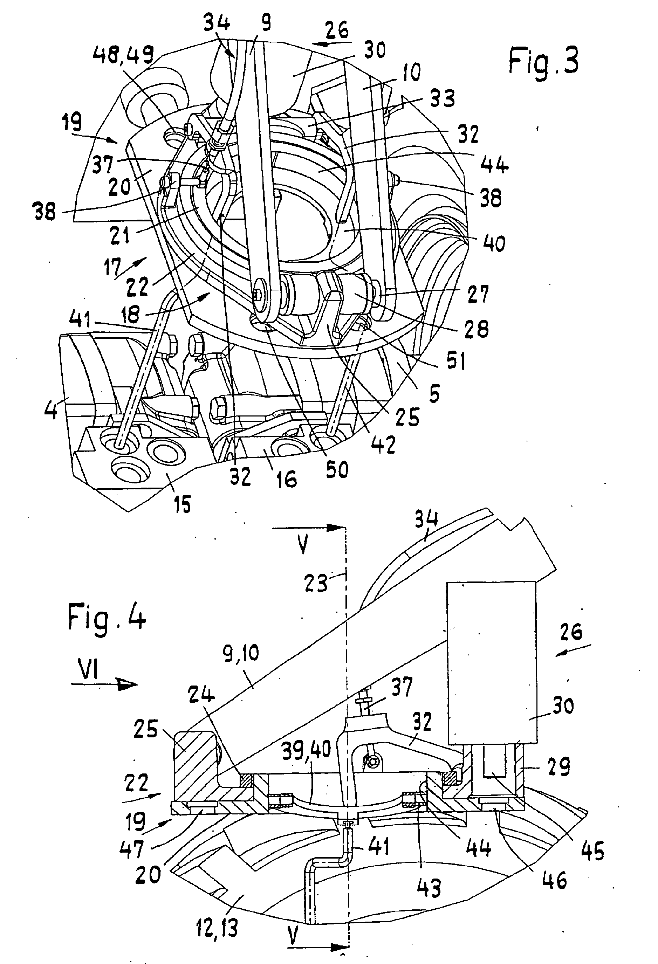

Zur Arretierung des Schwenkorgans 22 in den beiden um 180° versetzten Stellungen ist eine Arretiervorrichtung vorgesehen, die einen innerhalb der Stützvorrichtung 26 angeordneten Arretierdorn 45 aufweist, der jeweils in eine, in Fig. 4 gezeigten Bohrung 46, 47 des Supports 19 resp. der Befestigungsplatte 20 einsteck- und ausziehbar ist.

Es kommt öfters vor, dass für eine Arbeit in einer Hanglage oder entlang von ortsfesten Ojekten, wie beispielsweise Gebäuden oder Zäunen die Führungsholme 9, 10 seitlich verdreht arretiert werden müssen. Deshalb weist der Support 19 resp. die Befestigungsplatte 20 jeweils zwei weitere Bohrungen 48, 49 resp. 50, 51 auf, die einer Fortbewegungsrichtung F, F' zugeordnet sind und für die der Arretierdorn 45 ebenfalls verfügbar ist. Dadurch können die Führungsholme 9, 10 um etwa 20° verschwenkt zur Fortbewegungsrichtung F, F' resp. vom Objekt entfernt eingestellt werden.

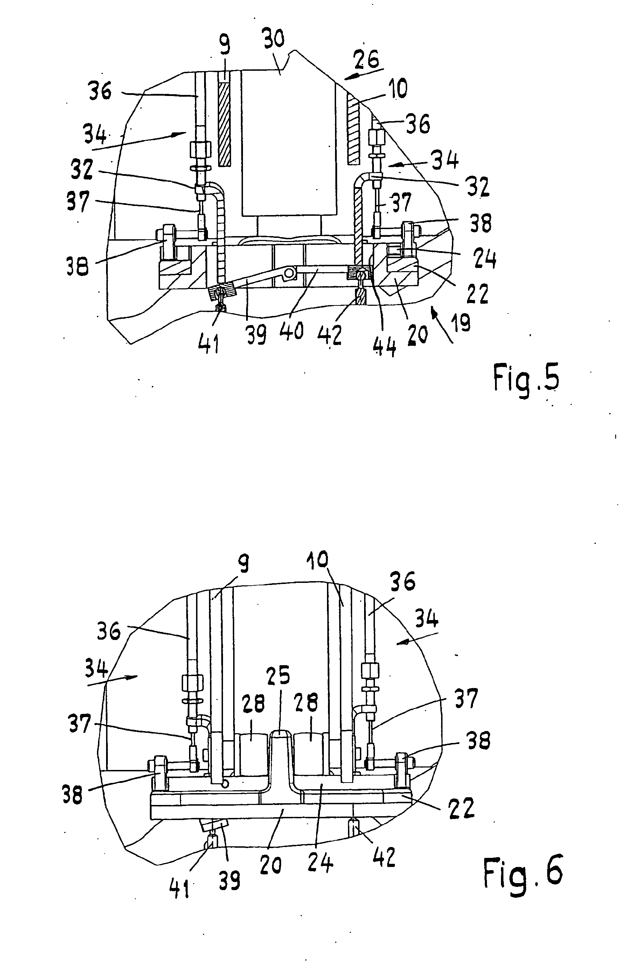

Die Fig. 2 bis 6 veranschaulichen insbesondere Einzelheiten der Schaltvorrichtung 17 und die Betätigungsorgane zur Bedienung der Lenkvorrichtung 8, die sich in schwierigem Gelände mit den Führungsholmen 9, 10 manuell nur schwer lenken oder manövrieren lässt.

So zeigen u.a. die Fig. 2 und 3 ein an einer senkrechten Achse 23 angeordnetes Schwenklager 18 der Schaltvorrichtung 17. Das Schwenklager 18 besteht aus einem maschinengestellseitig befestigten Support 19, der eine Befestigungsplatte 20 mit einer hochstehenden Ringschulter 21 aufweist, an der ein Schwenkorgan 22 gelagert ist. Ein Gewinde- 24 resp. Stellring oder dgl. arretiert Schwenkorgan 22 an der Ringschulter 21 in achsialer Richtung.

An dem Schwenkorgan 22 ist an dem der Bedienunsseite entgegengestzten Ende der Führungsholme 9, 10 ein Lagerbock 25 befestigt, in welchem die Führungsholme 9, 10 verstellbar gelagert sind. Auf der gegenüberliegenden Seite des Schwenkorgans 22 ist eine Stützvorrichtung 26 vorgesehen, an der die Führungsholme 9, 10 hinsichtlich ihrer Führungshöhe verstell- und feststellbar sind. Eine den Lagerbock 25 durchsetzende Welle 27 weist beidseits des Lagerbocks 25 und eingespannt zwischen den Führungsholmen 9, 10 jeweils ein Dämpfungselement 28 zur Minderung von auf die Führungsholme 9, 10 übertragenen Schwingungen auf.

Die Stützvorrichtung 26 übernimmt Schwingungen, die vom Gestell 2 resp. Support 19 resp. Schwenkorgan 22 über die Höhenverstellvorrichtung auf die Führungsholme 9, 10 übertragen werden können, indem zwischen einem inneren, am Schwenkorgan 22 befestigten Standrohr 29, und einem äusseren, radial beabstandeten Mantelrohr 30 ein elastisches Dämpfungsmaterial 31 vorgesehen ist.

Durch eine Relativbewegung zwischen Support 19 resp. Gestell 2 der Arbeitsmaschine 1 und dem Schwenkorgan 22 der Schaltvorrichtung 17 um 180° sind die dem Schwenkorgan 22 und den Führungsholmen 9, 10 jeweils zugeordneten Betätigungsorgane direkt oder durch ein Uebertragungselement 32, das vorliegend als Kipphebel ausgebildet ist, mit den dem Gestell 2 resp. Support 19 zugeordneten Betätigungsorganen antriebsverbunden.

Das Uebertragungselement 32 ist an dem Schwenkorgan 22 des Schwenklagers 18 in einem Lagerelement 33 schwenkbar angeordnet. Die von den Führungsholmen 9, 10 aus vorgenommene Lenkbetätigung wird somit durch die Uebertragungselemente 32 über Betätigungsorgane, die dem Support 19 resp. dem Gestell 2 der Arbeitsmaschine 1 zugeordnet sind, auf die Steuerventile 15, 16 der Hydraulikmotoren 4, 5 umgesetzt.

Bezüglich Anordnung der Steuerventile 15, 16 und den ihnen jeweils zugeordneten Hydraulikmotoren 4, 5 ist es möglich, eine Serieschaltung vorzunehmen, bei der die einem Rad 12, 13 zugeordneten Einheiten aus einem Steuerventil 15, 16 und einem Hydraulikmotor 4, 5 hintereinander geschaltet sind; oder die Einheiten parallel zu schalten, sodass sie über parallele Leitungen von der Hydraulikpumpe 14 versorgt werden; oder dass die Hydraulikmotoren 4, 5 parallel geschaltet sind, so dass sie von einem regulierbaren Steuerventil mit zwei Ausgangsleitungen differenziert bedient werden. Die Schaltweise nimmt jedoch keinen Anteil an der erfindungsgemässen Maschine.

Wie die Figuren weiterhin zeigen, weisen die dem Schwenkorgan 22 resp. den Führungsholmen 9, 10 zugeordneten Betätigungsorgane einen mit dem als Kipphebel ausgebildeten Uebertragungselement 32 verbundenen Bowdenzug 34 auf, der an dem gegenüberliegenden Ende an einen einarmigen Lenkhebel 35 gekoppelt ist. Der Bowdenzug 34 besteht aus einer ein stationäres Führungsseil 37 umgebenden Schalthülle 36, die die Lenkbetätigung durch einen Bedienenden auf das Uebertragungselement 32 vermittelt. Die Befestigung des Führungsseils 37 erfolgt schweklagerseitig über einen an dem Schwenkorgan 22 befestigten Halter 38.

Bei den supportseitig angeordneten Betätigungsorganen, die ihre Position um die Achse 23 nicht verändern, handelt es sich um jeweils ein Schaltelement 39, 40 der Schaltvorrichtung 17, das nurmehr einem Hydraulikmotor 4, 5 zugeordnet und als Betätigungsklappe ausgebildet ist. Das Schaltelement 39, 40 ist jeweils zur Betätigung eines Steuerventil 15, 16 vorgesehen und mit diesem durch ein Ventilbetätigungselement 41, hier eine Stösselstange, antriebsverbunden.

Bei dem dargestellten Ausführungsbeispiel sind die Schaltelemente 39, 40 als halbringförmige Betätigungsklappen ausgestaltet, die an einer gemeinsamen Schwenkachse 43 an dem Support 19 gelagert sind. Hierzu ist konzentrisch zur Achse 23 des Schwenkorgans 22 der Schaltvorrichtung 17 eine kreisrunde Ausnehmung 44 vorgesehen.

Trotz einer möglichen Schrägstellung der Führungsholme 9, 10 gegenüber der Fortbewegungsrichtung F, F', wie oben beschrieben, eignen sich die halbkreisförmigen Schaltelemente 39, 40 zur Ausübung ihrer Funktion.

Dennoch wäre es möglich, die Schaltelemente 39, 40 in einer senkrechten Führung anzuordnen und aufgrund der möglichen Schrägstellung der Führungsholme 9, 10 das mit dem Schaltelement in Wirkverbindung kommende Ende der Betätigungsorgane oder des Uebertragungselementes 32 mit einer grösseren Kontaktfläche auszubilden.

Der in Griffnähe an den Führungsholmen 9, 10 befestigte Lenkhebel 35 und die Betätigungsorgane sind gegen eine Rückstellkraft beaufschlagbar, sodass sie nach dem Freigeben in ihre Ausgangsstellung versetzt werden, in der die Arbeitsmaschine 1 eine gerade Fahrtrichtung einschlägt.

## Patentansprüche

1. Selbstfahrende, einachsige Arbeitsmaschine (1) für das Betreiben und stossweise oder gezogene Fortbewegen unterschiedlicher Anbaugeräte, welche Arbeitsmaschine (1) von vorwärtsresp. rückwärts in eine entgegengesetzte Fahrtrichtung (F, F') umschaltbar ist und an um eine etwa senkrechte Achse (23) jeweils in einem Halbkreis schwenkbaren Führungsholmen (9, 10) zur Aenderung der Fortbewegungsrichtung angeordnete Betätigungsorgane einer Lenkvorrichtung (8) aufweist, bestehend aus einem Antriebsmotor (6) für die Anbaugeräte, die einenends der Arbeitsmaschine (1) mit einer Abtriebswelle eines Getriebes (7) verbunden sind, und einer mit Rädern (12, 13) einer quer zur Fortbewegungsrichtung angeordneten Fahrachse (3) steuerbar verbundenen mechanischen oder hydraulischen Antriebsvorrichtung, wobei für einen Wechsel zur stossweisen oder gezogenen Fortbewegung eines Anbaugerätes mit sinngemäss unveränderten Bedienungsfunktionen der an den Führungsholmen (9, 10) zur Lenkung angeordneten Betätigungsorgane ein an einem Gestell (2) der Maschine (1) befestigte Schaltvorrichtung (17) vorgesehen ist, **dadurch gekennzeichnet, dass** die Schaltvorrichtung (17) ein Schwenklager (18) aufweist, das durch einen gestellseitig befestigten Support (19) und ein an diesem gelagertes Schwenkorgan (22) ausgebildet ist, an dem die mit den Betätigungsorganen versehenen Führungsholme (9, 10) der Lenkvorrichtung (8) befestigt sind

2. Maschine nach Anspruch 1, mit einer auf eine Antriebsvorrichtung der Räder (12, 13) einwirkenden mechanischen Lenkbremsanordnung, die jeweils eine einem Rad zugeordnete Bremsvorrichtung aufweist, **dadurch gekennzeichnet, dass** die Betätigungsorgane mit der Schaltvorrichtung verbunden sind.

3. Maschine nach Anspruch1, mit einer durch den Antriebsmotor (6) antreibbaren Hydraulikpumpe (14), die über ein betätigbares Steuerventil (15, 16) jeweils mit einem Hydraulikmotor (4, 5) eines Rades (12, 13) eine Antriebsvorrichtung bildend leitungsverbunden ist, **dadurch gekennzeichnet, dass** die Steuerventile (15, 16) mit der Schaltvorrichtung (17) verbunden sind.

4. Maschine nach Anspruch 1 oder 3, **dadurch gekennzeichnet, dass** die an dem Schwenkorgan (22) des Schwenklagers (18) angeordneten Betätigungsorgane der Lenkvorrichtung (8) jeweils direkt oder durch ein Uebertragungselement (32) mit den einem der Hydraulikpumpe (14) nachgeschalteten Steuerventil (15, 16) eines Hydraulikmotors (4, 5) zugeordneten Betätigungsorganen antriebsverbunden sind.

5. Maschine nach Anspruch 4, **dadurch gekennzeichnet, dass** die an dem Maschinengestell (2) resp. dem Support (19) angeordneten Betätigungsorgane der Lenkvorrichtung (8) jeweils ein mit einem Ventilbetätigungselement (41, 42) antriebsverbundenes Schaltelement (39, 40), beispielsweise eine Betätigungsklappe oder einen senkrecht geführten Schaltstein aufweisen.

6. Maschine nach Anspruch 5, **dadurch gekennzeichnet, dass** die Schaltelemente (39, 40) jeweils um eine gemeinsame Schwenkachse (43) an dem Support (19) gelagert sind.

7. Maschine nach Anspruch 5 oder 6, **dadurch gekennzeichnet, dass** die Schaltelemente (39, 40) resp. die Betätigungsklappen in einer Ausnehmung (44) des Supports (19) angeordnet sind.

8. Maschine nach Anspruch 7, **dadurch gekennzeichnet, dass** die Ausnehmung (44) konzentrisch zur Achse (23) des Schwenklagers (18) angeordnet ist.

9. Maschine nach einem der Ansprüche 4 bis 8, **dadurch gekennzeichnet, dass** das Uebertragungselement (32) als Kipphebel ausgebildet ist, der einen auf ein Schaltelement (39, 40) resp. eine Betätigungsklappe einwirkenden Stossfinger aufweist.

10. Maschine nach einem der Ansprüche 2 bis 9, **dadurch gekennzeichnet, dass** die mit dem Schwenkorgan (22) verbundenen Betätigungsorgane der Lenkvorrichtung (8) jeweils einen an einem Bedienungsgriff eines Führungsholms (9, 10) befestigten Lenkhebel (35) aufweisen, der durch einen Bowdenzug (34) mit dem Uebertragungselement (32) resp. dem Kipphebel verbunden ist.

11. Maschine nach einem der Ansprüche 1 bis 10, **dadurch gekennzeichnet, dass** die Betätigungsorgane gegen eine Rückstellkraft beaufschlagbar sind.

12. Maschine nach einem der Ansprüche 1 bis 11, **dadurch gekennzeichnet, dass** zur Schwenkarretierung der Schaltvorrichtung (17) resp. des Schwenkorgans (22) ein an dem Schwenkorgan (22) befestigter, parallel zur Achse (23) jeweils in eine Bohrung (46, 47) des Supports (19) einrastbarer und entnehmbarer Arretierdorn (45) vorgesehen ist.

13. Maschine nach einem der Ansprüche 1 bis 12, **dadurch gekennzeichnet, dass** die an dem Schwenkorgan (22) befestigten Führungsholme (9, 10) in eine zur Fortbewegungsrichtung (F, F') verschwenkte Lage versetzbar sind.

## Claims

1. Self-propelled, single-axle working machine (1) for driving and pushing or pulling various mounted implements, which working machine (1) can be switched over from a forward or backward direction of travel to the opposite direction of travel (F, F') and comprises actuating elements for a steering device (8) arranged on guide bars (9, 10) which can each swing in a semi-circle about an approximately vertical axis (23) in order to change the direction of movement, consisting of a drive motor (6) for the mounted implements connected at one end of the working machine (1) to a drive shaft of a gear unit (7), and a mechanical or hydraulic driving device controllably connected to wheels (12, 13) of an axle (3) arranged transversely to the direction of movement, a switching device (17) secured to a frame (2) of the machine (1) being provided for a change to pushing or pulling of a mounted implement with correspondingly unchanged operating functions of the actuating elements arranged on the guide bars (9, 10) for steering, **characterised in that** the switching device (17) comprises a swing bearing (18) formed by a support (19) secured to the frame and a swing element (22) mounted thereon and to which the guide bars (9, 10) of the steering device (8) provided with the actuating elements are secured.

2. Machine according to claim 1, with a mechanical steering brake arrangement acting on a driving device of the wheels (12, 13) and having a comprising device associated with one wheel, **characterised in that** the actuating elements are connected to the switching device.

3. Machine according to claim 1, with a hydraulic pump (14) which can be driven by the drive motor (6) and communicates with a hydraulic motor (4, 5) of a wheel (12, 13) by means of an adjustable control valve (15, 16) so as to form a driving device, **characterised in that** the control valves (15, 16) are connected to the switching device (17).

4. Machine according to claim 1 or claim 3, **characterised in that** the actuating elements of the steering device (8) arranged on the swing element (22) of the swing bearing (18) are each operatively connected either directly or by means of a transmission element (32) to the actuating elements associated with a control valve (15, 16) of a hydraulic motor (4, 5) arranged downstream of the hydraulic pump (14).

5. Machine according to claim 4, **characterised in that** the actuating elements of the steering device (8) arranged on the machine frame (2) or on the support (19) each comprise a switching element (39, 40), e.g. an actuating flap or a perpendicularly guided sliding block, operatively connected to a valve-actuating element (41, 42).

6. Machine according to claim 5, **characterised in that** the switching elements (39, 40) are each mounted on the support (19) about a common swing axis (43).

7. Machine according to claim 5 or claim 6, **characterised in that** the switching elements (39, 40) or the actuating flaps are arranged in a recess (44) in the support (19).

8. Machine according to claim 7, **characterised in that** the recess (44) is arranged concentrically with the axis (23) of the swing bearing (18).

9. Machine according to one of claims 4 to 8, **characterised in that** the transmission element (32) is designed as a rocker arm comprising a pusher finger acting on a switching element (39, 40) or an actuating flap.

10. Machine according to one of claims 2 to 9, **characterised in that** the actuating elements of the steering device (8) connected to the swing element (22) each comprise a steering lever (35) secured to an operating handle of a guide bar (9, 10) and connected by means of a Bowden cable (34) to the transmission element (32) or the rocker arm.

11. Machine according to one of claims 1 to 10, **characterised in that** the actuating elements can be acted upon against a restoring force.

12. Machine according to one of claims 1 to 11, **characterised in that** a locking pin (45) which is secured to the swing element (22) and can be snapped into and removed from a bore (46, 47) in the support (19) parallel to the axis (23) is provided in order to lock the switching device (17) or swing element (22).

13. Machine according to one of claims 1 to 12, **characterised in that** the guide bars (9, 10) secured to the swing element (22) can be displaced into a position swung towards the direction of movement (F, F').

## Revendications

1. Machine automotrice de travail (1) à essieu unique, conçue pour entraîner et pour faire progresser divers appareils à montage rapporté, en mode échelonné ou continu, laquelle machine de travail (1) peut être respectivement commutée dans une direction de déplacement opposée (F, F'), à partir de la marche avant ou de la marche arrière; et est équipée d'organes d'actionnement d'un dispositif de direction (8) implantés, en vue de modifier le sens du mouvement de progression, sur des barres de guidage (9, 10) pouvant respectivement pivoter en décrivant un demi-cercle autour d'un axe (23) sensiblement vertical, et comprenant un moteur (6) d'entraînement des appareils à montage rapporté reliés, à une extrémité de ladite machine de travail (t), à un arbre de sortie d'une transmission (7), ainsi qu'un dispositif mécanique ou hydraulique d'entraînement relié, avec faculté de commande, à des roues (12, 13) d'un essieu (3) agencé transversalement par rapport au sens dudit mouvement de progression, un dispositif de commutation (17), fixé à un châssis (2) de ladite machine (1), étant prévu pour provoquer la commutation sélective d'un appareil à montage rapporté vers la progression échelonnée ou continue, moyennant des fonctions de manoeuvre adéquatement inchangées des organes d'actionnement implantés, sur les barres de guidage (9, 10), en vue d'assurer le braquage, **caractérisée par le fait que** ledit dispositif de commutation (17) comporte un palier de pivotement (18) constitué d'un support (19) assujetti côté châssis, et d'un organe pivotant (22) qui est monté sur ledit support et auquel sont fixées les barres (9, 10) de guidage du dispositif de direction (8), pourvues des organes d'actionnement.

2. Machine selon la revendication 1, équipée d'un ensemble mécanique de freinage directionnel qui agit sur un dispositif d'entraînement des roues (12, 13) et est muni, respectivement, d'un dispositif de freinage affecté à une roue, **caractérisée par le fait que** les organes d'actionnement sont reliés au dispositif de commutation.

3. Machine selon la revendication 1, équipée d'une pompe hydraulique (14) qui peut être menée par le moteur d'entraînement (6) et est respectivement en liaison par conduits avec un moteur hydraulique (4, 5) d'une roue (12, 13), par l'intermédiaire d'une vanne actionnable de commande (15, 16), en formant un dispositif d'entraînement,
**caractérisée par le fait que** les vannes de commande (15, 16) sont reliées au dispositif de commutation (17).

4. Machine selon la revendication 1 ou 3, **caractérisée par le fait que** les organes d'actionnement du dispositif de direction (8), implantés sur l'organe pivotant (22) du palier de pivotement (18), sont respectivement en liaison d'entraînement, en mode direct ou par l'entremise d'un élément de transmission (32), avec les organes d'actionnement affectés à une vanne de commande (15, 16) d'un moteur hydraulique (4, 5) qui est placée en aval de la pompe hydraulique (14).

5. Machine selon la revendication 4, **caractérisée par le fait que** les organes d'actionnement du dispositif de direction (8), respectivement implantés sur le châssis (2) de ladite machine ou sur le support (19), sont munis d'un, élément respectif de commutation (39, 40) qui est en liaison d'entraînement avec un élément (41, 42) d'actionnement des vannes et qui revêt, par exemple, la forme d'un clapet d'actionnement ou d'un coulisseau à guidage vertical.

6. Machine selon la revendication 5, **caractérisée par le fait que** les éléments de commutation (39, 40) sont respectivement montés sur le support (19), autour d'un axe commun de pivotement (43).

7. Machine selon la revendication 5 ou 6, **caractérisée par le fait que** les éléments de commutation (39, 40), respectivement les clapets d'actionnement, sont logés dans un évidement (44) du support (19).

8. Machine selon la revendication 7, **caractérisée par le fait que** l'évidement (44) occupe une position concentrique à l'axe (23) du palier de pivotement (18).

9. Machine selon l'une des revendications 4 à 8, **caractérisée par le fait que** l'élément de transmission (32) est réalisé sous la forme d'un levier basculant doté d'un doigt de poussée agissant, respectivement, sur un élément de commutation (39, 40) ou sur un clapet d'actionnement.

10. Machine selon l'une des revendications 2 à 9, **caractérisée par le fait que** les organes d'actionnement du dispositif de direction (8), reliés à l'organe pivotant (22), sont pourvus d'une manette respective de commande (35) fixée à une poignée de manoeuvre d'une barre de guidage (9, 10) et respectivement reliée, par l'intermédiaire d'une tringlerie Bowden (34), à l'élément de transmission (32) ou au levier basculant.

11. Machine selon l'une des revendications 1 à 10, **caractérisée par le fait que** les organes d'actionnement peuvent être sollicités en opposition à une force de rappel.

12. Machine selon l'une des revendications 1 à 11, **caractérisée par le fait qu'**un goujon d'arrêt (45), fixé à l'organe pivotant (22) et pouvant être respectivement cranté dans un perçage (46, 47) du support (19) et extrait dudit perçage, parallèlement à l'axe (23), est prévu pour assurer l'arrêt respectif du pivotement du dispositif de commutation (17), ou dudit organe pivotant (22).

13. Machine selon l'une des revendications 1 à 12, **caractérisée par le fait que** les barres de guidage (9, 10), fixées à l'organe pivotant (22), peuvent être amenées à une position prise par pivotement vis-à-vis de la direction (F, F') du mouvement de progression.
